# FASCICULE DE BREVET EUROPEEN

(11) **EP 0 726 860 B1**
(45) Date de publication et mention de la délivrance du brevet: **12.03.1997**
(21) Numéro de dépôt: 95900175.1
(22) Date de dépôt: 28.10.1994
(51) Int. Cl.: B62D 65/00

(54) **PROCEDE ET DISPOSITIF D'ASSEMBLAGE POUR PIECES DE CARROSSERIE**
VERFAHREN UND VORRICHTUNG ZUM VERBINDEN VON KAROSSERIETEILEN
METHOD AND DEVICE FOR ASSEMBLING BODYWORK PARTS

(30) Priorité: 03.11.1993 FR 9313062
(43) Date de publication de la demande: 21.08.1996
(73) Titulaire: ABB PRECIFLEX SYSTEMS, 95250 Beauchamp (FR)
(72) Inventeur: NEGRE, Bernard, F-75020 Paris (FR)
(74) Mandataire: Robert, Jean-Pierre
(86) Numéro de dépôt international: FR9401260
(87) Numéro de publication internationale: WO9512515

(56) Documents cités:
- EP-A- 0 438 989
- FR-A- 2 383 818
- GB-A- 2 185 220
- GB-A- 2 236 285
- GB-A- 2 260 717
- US-A- 4 667 866
- US-A- 4 869 416

## Description

La présente invention concerne un procédé et un dispositif d'assemblage pour des pièces de carrosserie automobile notamment d'éléments de tôlerie et plus particulièrement les moyens permettant une mise en géométrie, c'est-à-dire une mise en place et un maintien précis des pièces les unes par rapport aux autres, l'ensemble étant également mis en place et maintenu de manière précise dans un repère fixe où évoluent les outils d'assemblage (robots de soudure, pinces mécanisées de soudage fixes ou mobiles, outils de collage ou d'encollage, torche laser...).

Dans le domaine de l'assemblage des pièces de tôlerie, et plus généralement des pièces en matériau composite utilisées en carrosserie automobile, il existe à l'heure actuelle deux méthodes principales pour réaliser cette mise en position, dite "mise en géométrie" aux fins d'assemblage notamment par soudure.

La première consiste à amener à un poste d'assemblage les pièces à assembler et à les assujettir entre elles au moyen d'outils de mise en géométrie. Ces outils appartiennent à un poste, par exemple le long d'une ligne d'assemblage général et leur position est repérée dans un système de référence fixe du poste dans lequel évolue également les outils d'assemblage. Il s'agit alors d'une machine ou d'une ligne spécifique qui ne peut accepter qu'un seul modèle d'objet tel qu'une carrosserie de voiture. Un soubassement est amené au poste au moyen d'un convoyeur inférieur puis est séparé de ce convoyeur grâce à des organes (butées, doigts de centrage, supports verticaux...) de mise en référence de ce soubassement dans le repère du poste. D'autres convoyeurs apportent les côtés de caisse au poste où ils sont pris en charge par des outils mobiles de mise en place de ces côtés de caisse dans une position déterminée dans le repère du poste, donc par rapport au soubassement. Enfin, d'autres outils apportent le pavillon, les traverses, ... de la même manière.

Un tel poste d'assemblage ne permet de réaliser qu'une seule géométrie (monogéométrie) avec l'avantage de reproduire exactement la même géométrie pour chaque produit qui le traverse. Cette spécificité de la machine présente cependant l'inconvénient de ne pas tolérer de modifications du modèle sans intervention lourde sur l'outillage. Par ailleurs, elle ne permet pas d'être adaptée au montage de plus d'un modèle dans un même flux.

On a cherché à rendre plus souple une telle ligne d'assemblage, d'où une seconde méthode qui consiste à réaliser des sous-ensembles de pièces assemblées dans une palette (bas de caisse, côté de caisse, bloc avant...) puis à amener toutes les palettes nécessaires à la réalisation de la carrosserie à un même poste où elles sont rapprochées les unes des autres dans une position fixe par des moyens appartenant au poste de mise en géométrie. Chaque palette se présente grossièrement comme un cadre ou plateau sur une face de laquelle des moyens de mise en position et de maintien de la pièce sont à demeure et dédiés à cette pièce tandis que l'autre face de la palette comporte des moyens standard, que l'on retrouvera sur toutes les palettes du même type (soubassement, côté de caisse...) de manière identique. Ces moyens standard sont destinés à coopérer avec les outils simples de mise en référence qui appartiennent au poste. Un tel poste peut donc accueillir des palettes portant des modèles différents car les outils qu'il comporte ne "voient" qu'une seule et même face de palette quel que soit le modèle. Seule la commande informatique relative à leur course ou leur trajectoire est à changer d'un modèle à l'autre, ce qui est infiniment plus rapide qu'une modification des outillages. La mise en géométrie s'opère en général par verrouillage des palettes aux moyens fixes du poste de travail. Une telle technique est dite de multigéométrie car même deux produits identiques (un même modèle de véhicule) sont traités au moyen de palettes distinctes qui sont nécessairement différentes du fait des dispersions de côtes entre les pièces identiques qui composent ces deux palettes. Ainsi, deux produits d'un même modèle n'ont nécessairement pas la même géométrie, et la fabrication qui en résulte est de qualité inférieure à une fabrication du type monogéométrie.

En outre, ces palettes sont des moyens extrêmement lourds et encombrants. Ils demandent de mettre en place des moyens de manutention puissants et également très encombrants qui nuisent à l'accessibilité du poste. Il est nécessaire en outre de disposer d'un grand nombre de palettes pour assurer la rotation de celles-ci entre les lignes d'assemblage en amont pour les pourvoir de la pièce qu'elle doit porter et la ligne d'assemblage général. Il s'ensuit en coût important de ce type d'installation qui limite l'intérêt de son utilisation.

Il existe donc un besoin non satisfait pour réaliser une ligne d'assemblage de pièces de tôlerie qui soit d'emploi large et de coût de revient faible, tout en conservant les qualités d'un système du type monogéométrie.

L'invention permet de satisfaire ce besoin en proposant un procédé et un dispositif de montage qui met en oeuvre un moyen d'interface léger qui rend la pièce transparente à l'égard de ses moyens de manutention, ce qui permet de les banaliser et donc d'offrir au constructeur un plus grand choix, ce moyen d'interface portant par ailleurs une partie des moyens de la pièce destinés à coopérer avec des moyens de mise en géométrie du poste d'assemblage, ce qui permet de mettre en place des postes spécifiques de type monogéométrie avec l'avantage de leur meilleure précision que dans les postes à palettes recyclables, tout en favorisant une certaine standardisation de la nature et de l'emplacement des moyens de mise en géométrie portés par le support d'un modèle à l'autre.

Plus précisément, ce procédé d'assemblage de pièces de tôlerie par lequel au moins deux éléments séparés sont amenés dans un poste de mise en géométrie, sont immobilisés au moyen d'outils de positionnement appartenant au poste dans une position relative déterminée et dans une position d'ensemble également déterminée dans le repère du poste et sont fixés l'un à l'autre notamment par soudure, consiste, selon l'invention, à associer à au moins l'un des éléments un support comportant des moyens de préhension de l'élément, des moyens pour son attelage à au moins un dispositif de manutention et des moyens pour son indexation dans le repère du poste de mise en géométrie, à amener l'élément dans le poste de mise en géométrie par l'intermédiaire de ce support, à procéder à une indexation au moins partielle de l'élément dans le poste de mise en géométrie par l'intermédiaire du support , en actionnant les outils de positionnement pour qu'ils coopèrent de manière partagée avec l'élément et avec le support pour parvenir à la mise en position définitive de l'élément avec le cas échéant, libération de certains au plus des moyens de préhension et à procéder à la liaison mutuelle des éléments.

On comprend que ce procédé présente l'avantage d'offrir une continuité pour les étapes successives de construction d'un assemblage de pièces de tôlerie. En effet, il faut entendre par élément une pièce élémentaire et dans ce cas le procédé est mis en oeuvre dans les lignes d'assemblage de sous-ensembles dès le premier poste, l'élément "s'enrichissant" au fur et à mesure de son passage dans les postes successifs pour devenir un sous-ensemble toujours associé au support de base mis en oeuvre dès l'origine.

Ce sous-ensemble, toujours associé à son support parvient alors à la ligne d'assemblage général et le terme "élément" doit être alors compris comme représentant ce sous-ensemble. Dans ce cas, chaque élément amené aux postes de la ligne d'assemblage général pourra être un sous-ensemble associé lui-même à un support l'ayant suivi tout au long de sa chaîne d'assemblage en amont de l'assemblage général.

L'intérêt du partage, entre le support et le sous-ensemble évolutif qu'il porte, des repères ou points de référence pour les fonctions de géométrie résulte d'une hiérarchisation des points de référence. On sait par exemple que certains points d'une carrosserie de véhicule doivent être précisément fixés dans l'espace et selon les trois axes du référentiel. D'autres, en revanche, demandent une précision importante le long d'un ou de deux axes seulement mais moins de précision dans la direction du troisième axe. Par exemple, au cours du processus d'élaboration d'un côté de caisse de véhicule, la précision requise au niveau des brancards (pavillon, haut de parebrise, lunette arrière) est beaucoup plus importante que dans la partie inférieure du côté de caisse à lier au plancher. Il y a donc tout intérêt à traiter la mise en géométrie des brancards, des pièces qui y sont progressive-ment associées et, dans l'assemblage général, leur liaison mutuelle au travers de traverses et du pavillon, avec des outils de géométrie fixes qui coopèrent directement avec ces pièces et ce, à chaque stade de la construction de ces sous-ensembles.

En revanche pour le bas de côté de caisse, il n'y a pas d'inconvénient à placer une pièce intermédiaire entre le sous-ensemble et les moyens de géométrie des différents postes. Il est ainsi possible de supporter le sous-ensemble avec un moyen beaucoup plus léger qu'une palette, ce qui est avantageux à plusieurs titres. D'abord le poids et l'encombrement d'une palette interdisent son usage dès l'origine si bien qu'il est nécessaire de procéder, dans la technique à palette à des assemblages préliminaires dans des postes extérieurs à la palette, et à procéder à des manutentions spécifiques de ces composants. Ensuite, une palette est un écran entre les outils de mise en géométrie dans la ligne d'assemblage général et le produit (carrosserie) qui pénalise la précision de cette mise en géométrie. La chaîne de cotes entre ces outils et le produit est donc nécessairement plus longue et, à précision égale des outils du poste de mise en géométrie, l'incertitude de positionnement du produit est plus importante.

Ce support léger, conforme à l'invention, permet par ailleurs de mettre en oeuvre des moyens de manutention également légers donc peu encombrants, ce qui facilite l'accès à chaque poste pour les organes de soudure ou autres moyens d'assemblage.

Ce support enfin présente l'avantage d'être stockable dans un petit volume, notamment par suspension verticale.

Selon l'invention, ce support comporte une structure sensiblement contenue entre deux surfaces dont l'une comporte des moyens de mise en position référencée et de maintien de l'élément et dont l'autre face comporte certains des moyens d'indexation de l'ensemble support/élément dans le système de référence de chaque poste qui l'accueille. Cette structure légère se présente à la fois comme une main de préhension des éléments à assembler et comme un repère mobile dans lequel ces éléments sont parfaitement référencés.

On notera à cet égard que les références (moyens qui coopèrent à la géométrie du produit) qui appartiennent au support n'ont pas besoin d'être strictement et rigidement liés les unes aux autres par ce support car elles seront reprises en charge par les moyens de mise en géométrie de chaque poste. Il s'ensuit un avantage important de l'invention, à savoir que la structure du support pouvant tolérer une certaine déformation élastique, peut être construite comme une armature légère dont les déformations si elles sont bien entendu contenues dans des limites admissibles n'ont pas d'influence sur la géométrie du produit car elles sont "corrigées" à chaque poste desservi par ce support. Dans ce qui suit, ce support sera également dénommé cassette.

D'autres caractéristiques et avantages ressortiront de la description donnée ci-après des moyens de l'invention par le biais d'une application particulière.

Il sera fait référence aux dessins annexés dans lesquels :
- la figure 1 est une vue du dessus d'une ligne de confection d'un sous-ensemble de carrosserie, par exemple un côté de caisse coopérant avec une ligne d'assemblage général, - la figure 2 est une vue en élévation d'une cassette selon l'invention adaptée à transporter et mettre en position un côté de caisse de véhicule,
- les figures 3, 4, 5 et 6 sont des coupes selon respectivement les lignes III-III, IV-IV, V-V et VI-VI de la figure 2 illustrant les moyens de mise en référence et de préhension que comporte la cassette selon l'invention.

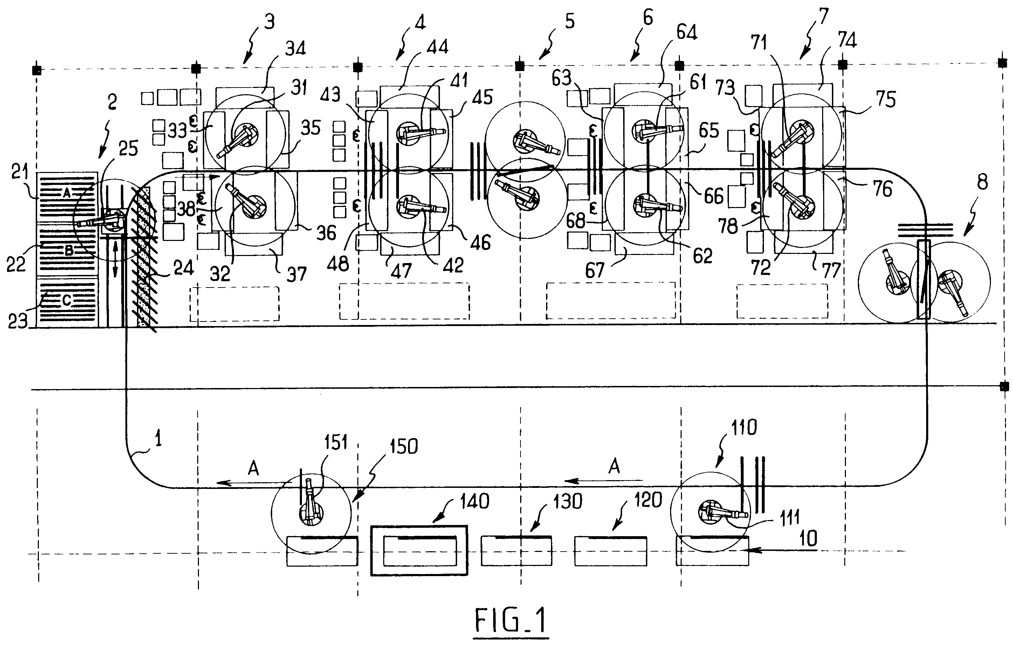

A la figure 1, on a représenté un transporteur général 1 en boucle qui circule selon les flèches A d'une part au travers de sept postes 2 à 8 d'une ligne de confection d'un sous-ensemble de carrosserie de véhicule par exemple un côté de caisse, et d'autre' part le long d'une ligne d'assemblage général 1O dans laquelle, au travers de plusieurs postes, le côté de caisse est réuni aux autres sous-ensembles de la carrosserie d'un véhicule automobile.

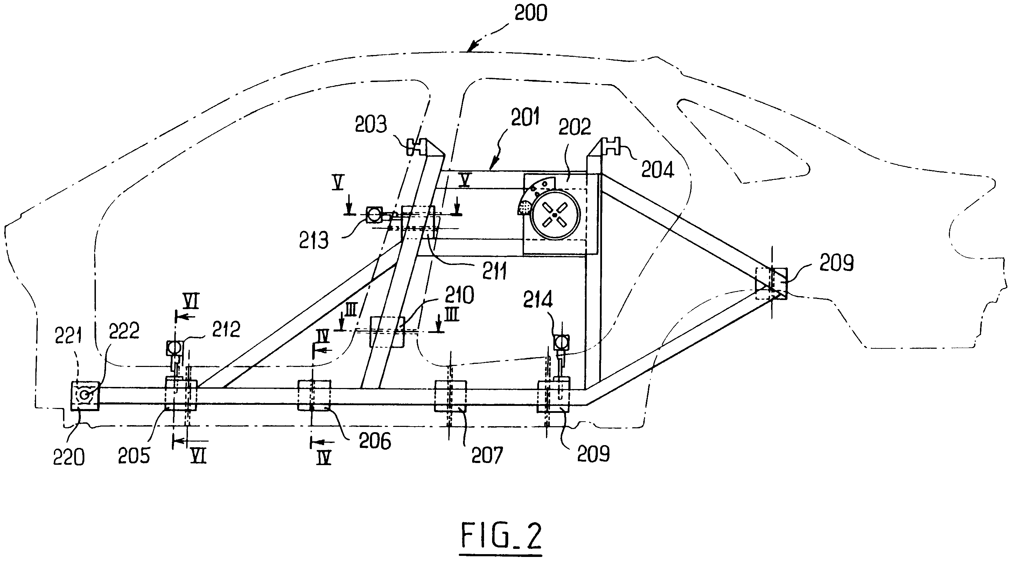

On supposera que la ligne à traverser par le dispositif de manutention générale 1 est destinée à la construction de trois modèles différents A, B, C de côté de caisse. Le poste 2 comporte donc trois magasins 21, 22, 23 de la première pièce de ce côté de caisse qui est en général une pièce de peau. Il comporte également un râtelier 24 qui contient des cassettes dont un exemple est illustré par la figure 2, pour chacun des trois modèles de côté de caisse à réaliser. Un organe de manutention 25 représenté ici sous la forme d'un robot permet d'une part de servir et desservir le dispositif général de manutention 1 et d'autre part d'associer à chacune des cassettes 24 la pièce de peau des modèles A, B, C correspondantes en se servant de la cassette comme main de préhension de la pièce à saisir et à extraire des magasins 21, 22, 23.

La cassette ainsi équipée de la première pièce et par rapport à laquelle cette première pièce est mise en référence précisément grâce aux moyens que l'on aura détaillés en regard des figures suivantes, est transportée au poste 3. Déchargée de la ligne de manutention générale 1 au moyen de l'un ou l'autre des robots de manipulation 31, 32, la cassette est selon le modèle qu'elle concerne placée dans l'un des postes 33 à 38 où la pièce de peau qu'elle porte est enrichie d'éléments supplémentaires. Chacun des postes 33 à 38 est un poste de mise en géométrie qui possède donc des références pour accueillir l'ensemble cassette plus pièce de peau et pour maintenir les éléments que l'on va additionner à cette pièce de peau. Une partie des références de chacun de ces postes coopère avec la cassette tandis que l'autre partie coopère avec la pièce de peau portée par la cassette. Le partage de la coopération de ces références de chaque poste avec la pièce ou la cassette est important car il permet de distinguer entre des références qui doivent être précises pour réaliser des assemblages à faible tolérance et des références moins précises. Là où les tolérances d'assemblage doivent être faibles -références que l'on désignera comme principales pour le poste considéré-, on a tout intérêt à créer un contact direct entre les pièces à assembler et les outils de mise en géométrie afin de réduire au maximum les chaînes de cote dont la longueur conditionne la précision, alors que, pour les autres références, que l'on désignera comme références complémentaires, la présence d'une pièce intermédiaire entre le produit et les références du poste de mise en géométrie reste compatible avec les tolérances imposées.

Grâce à cette distinction, il est possible dans chacun des postes de la station 3, de mettre en référence l'ensemble cassette - produit sans avoir à séparer la cassette du produit, dans la mesure où la cassette coopère avec les produits dans des zones où la précision de la mise en géométrie a moins d'importance.

Les manipulateurs 31, 32 coopèrent uniquement avec la cassette associée au produit pour servir et desservir la ligne de manutention l et pour mettre en place l'ensemble cassette - produit dans les postes adéquats de la station 3. Le travail étant terminé à la station 3, la cassette est introduite à la station suivante 4 par la ligne générale de manutention 1 où, de même que dans le poste précédent, des manipulateurs 41, 42 assurent la manutention entre la ligne 1 et les différents postes 43 à 48 de la station.

La station 5 est une station de finition dans laquelle il n'existe pas d'opération de mise en géométrie. Dans ce type de station, on réalise des compléments de soudure, des collages, la pose de moyens intermédiaires de fixation, qui ne mettent en jeu que la pièce solidaire du support. Par exemple, pour certaines opérations, il suffit simplement, sans dissocier la pièce de la manutention générale, d'opérer à une mise en butée de celle-ci (taquage) pour la positionner dans le référentiel d'évolution du robot de soudure ou de pose d'un joint de colle. Pour d'autres opérations, le sous-ensemble porté par la cassette est repris en charge par un robot de manutention qui l'amène directement entre les machoires d'une pince à souder fixée par exemple au sol.

Les stations 6 et 7 sont en tous points semblables aux stations 3 et 4 pour enrichir le sous-ensemble côté de caisse de tous les moyens dont il a besoin et à cet effet ces stations possèdent des manipulateurs 61, 62, 71, 72 et des postes de mise en géométrie 63 à 68 et 73 à 78.

Le poste 8 est un poste de finition et de contrôle final avant l'introduction de la cassette équipée du sous-ensemble côté de caisse terminé dans la ligne d'assemblage général 1O.

Au premier poste 11O de cette ligne d'assemblage général, un manipulateur 111 permet d'introduire chacune des cassettes équipée du côté de caisse le long par exemple du soubassement de caisse. Il faut imaginer une même installation de l'autre côté de cette ligne d'assemblage général pour l'introduction d'un second côté de caisse. Chaque poste 12O, 13O et 14O de la ligne d'assemblage général est par exemple dédié à l'assemblage de l'un des trois modèles de véhicules qui constituent le flux de fabrication sur cette ligne d'assemblage général. D'autres dispositions peuvent être adoptées comme par exemple disposer d'un poste unique et de changer, en fonction du modèle à réaliser sur ce poste, les outillages de mise en géométrie de ce poste unique. Bien entendu le choix entre ces diverses solutions dépend essentiellement de la similitude ou de la différence entre les modèles que doit accueillir la ligne d'assemblage général.

Au poste 15O, un manipulateur 151 permet de récupérer chacune des cassettes, le côté de caisse étant alors soudé au reste de la structure du véhicule. Cette cassette est ramenée par la ligne de manutention 1 au poste 2 soit pour être stockée dans le râtelier 24, soit pour être immédiatement réutilisée si la demande instantanée de côtés de caisses correspond au modèle qu'elle est capable d'accueillir.

A la figure 2, le côté de caisse représenté en traits mixtes porte la référence 2OO. Il s'agit pour l'essentiel d'une tôle ou d'un ensemble de tôles découpé embouti dont une face, celle visible sur la figure, constitue au moins partiellement la peau du véhicule, la face opposée de cette tôle étant équipée d'un certain nombre de pièces et accessoires destiné d'une part à son assemblage avec les autres pièces de carrosserie, et d'autre part à constituer des moyens de liaison ou d'accueil pour des éléments tels que des habillages intérieurs, des charnières de portes, des gâches de serrures etc. Du côté de la peau, le côté de caisse 2OO est équipé d'une cassette 2O1. Cette cassette est en fait une structure relativement légère et aérée comprise entre deux surfaces parallèles qui sont également sensiblement parallèles à la surface de peau du côté de caisse. Du côté de sa surface extérieure, c'est-à-dire celle visible à la figure 2, la cassette 2O1 comporte un certain nombre de zones 2O2, 2O3, 2O4 qui sont équipées de moyens de réception et de liaison de la cassette à un dispositif de manutention. Ainsi la zone 2O2 est-elle constituée par une sorte de platine que peut accoster l'extrémité du poignet d'un manipulateur tel que 25, 31, 41... et sur laquelle ce manipulateur peut se verrouiller. En outre, cette zone 2O2 peut porter des informations permettant au manipulateur de reconnaître le type de cassette qu'il est en train d'accoster et de prendre en charge afin de pouvoir diriger correctement la cassette au poste approprié à la recevoir dans chacune des stations 2 à 8.

En partie supérieure, les zones 2O3 et 2O4 de la cassette comportent simplement des axes permettant sa suspension à par exemple un convoyeur aérien qui pourrait constituer la ligne générale 1 de manutention.

La forme générale de la cassette 2O1 est bien entendue dictée par la forme générale du sous-ensemble qu'elle doit prendre en charge ainsi que par les zones de ce sous-ensemble qui, dans les différents postes de sa construction et dans le poste d'assemblage général, doivent constituer des références à mettre en place précisément c'est-à-dire devant être directement au contact des outils de mise en géométrie. Ainsi, dans l'exemple de la figure 2, huit zones de référence ont été retenues. Il s'agit des zones inférieures 205, 206, 207, 208 qui se trouvent en regard du bavolet du côté de caisse, de la zone 209 en regard de la partie supérieure du passage de roue arrière, des zones 210 et 211 en regard du pied milieu du côté de caisse et de la zone 22O au droit de la partie avant du coté de caisse. Dans ces zones, la cassette présente sur sa face extérieure une platine qui constitue une surface de référence déterminée destinée à coopérer avec les outils de mise en référence qui sont en attente ou activés dans les différents postes des stations 3, 4, 6, 7 et dans la ligne d'assemblage générale.

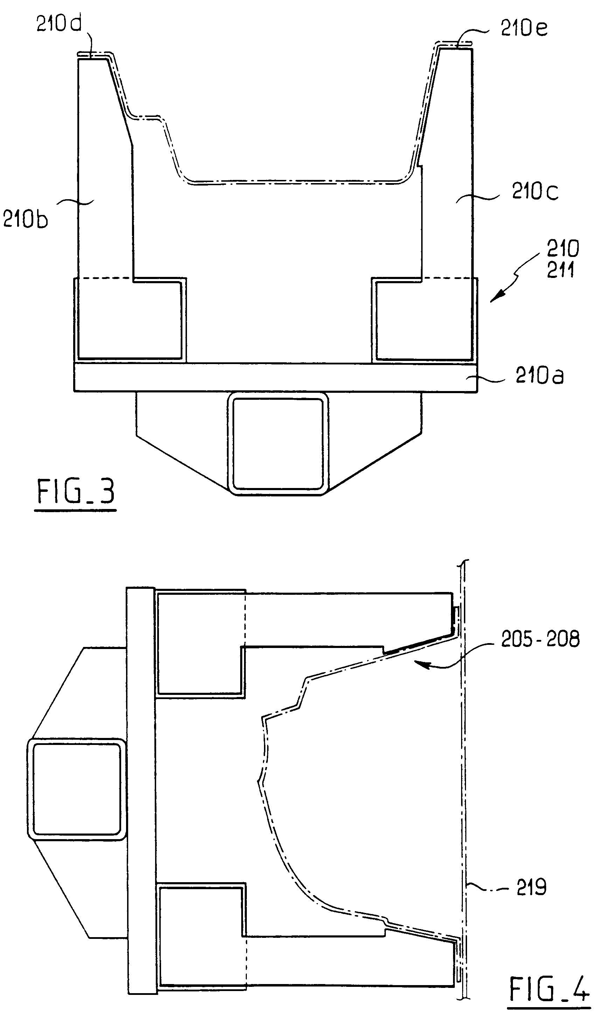

Sur l'autre face, et dans ces zones 205 à 211 et 22O, la cassette présente également des surfaces de référence pour accueillir le côté de caisse 200 et pour en maintenir sa géométrie qui est relativement déformable compte tenu du fait qu'il s'agit essentiellement de tôles embouties. C'est ainsi qu'à la figure 3, on a représenté la zone 210 de la cassette avec sa platine 210a et deux bras 210b, 210c qui sont adaptés d'une part à maîtriser la forme du pied milieu et d'autre part à présenter des surfaces d'extrémité 210d, 210e pour l'appui de ce pied milieu, ces surfaces d'extrémité étant parfaitement définies par rapport à la surface extérieure de la platine 210a.

On trouve une structure tout à fait semblable pour ce qui concerne les zones 205 à 208 qui coopèrent avec le bavolet en saillie du côté de caisse.

Dans la zone 209, le côté de caisse est d'une part appuyé comme dans les autres zones contre une surface jouant le même rôle que les surfaces 210d et 210e de la figure 3, et d'autre part est soutenu verticalement par une équerre glissée au point haut du passage de roue. Cette disposition n'est pas représentée car on peut imaginer différentes manières d'indexer le côté de caisse à la cassette. On voit dans le cas présent que pour les zones 205 à 208, 210 et 211 la seule référence précise est celle qui est prise dans une direction perpendiculaire à la figure. Pour ce qui concerne la zone 209, la référence a deux composantes, la même que celle des zones précédentes plus une composante verticale puisqu'il existe une surface de soutien du passage de roue. Dans la zone 220, le moyen d'indexation du côté de caisse sur la cassette est constitué par un pilote (cylindre de centrage) 221 qui est logé dans un orifice de la carrosserie (du côté de la cassette tournée vers le côté de caisse) et qui possède un alésage 222 pouvant accueillir lui-même un pilote d'une station de la ligne de sous-ensemble et d'un poste de la ligne d'assemblage général. On notera à ce propos l'intérêt de cette disposition qui protège l'orifice du côté de caisse qui aurait, à chaque station, à recevoir un pilote qui conduit à un élargissement et une ovalisation de l'orifice détruisant la précision de la référence.

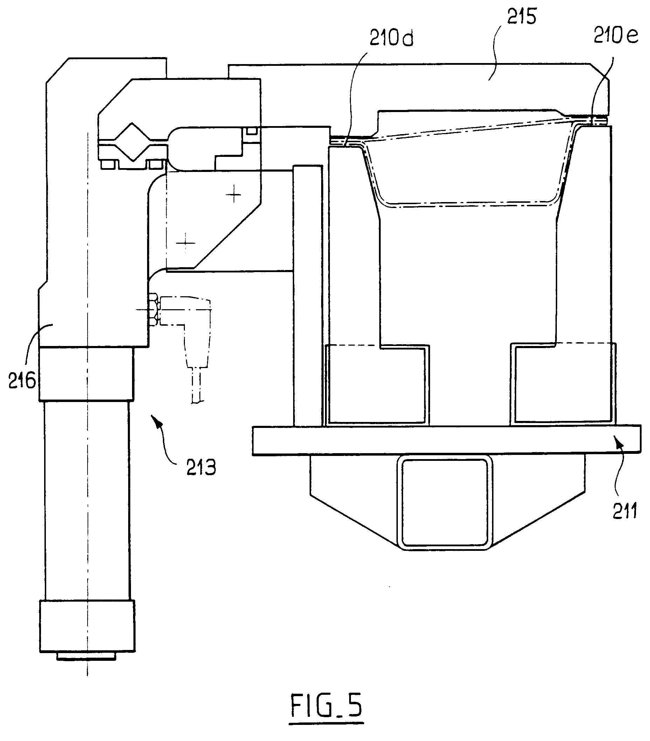

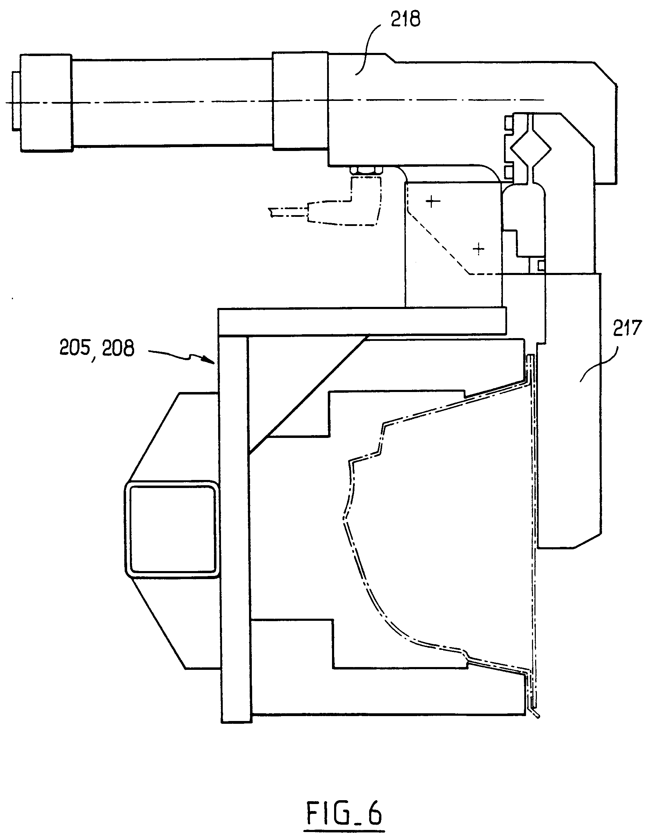

La cassette comporte également sur sa face opposée à celle visible sur la figure 2 des moyens de maintien de préférence sans- serrage du côté de caisse contre la cassette et notamment contre les surfaces de références qu'elle portent. Ces moyens sont illustrés par les figures 5 et 6 et sur la figure 2 portent les références 212, 213 et 214. Au voisinage de la zone 211 (en décalage au-dessus de cette zone par exemple pour en laisser l'accès libre), le moyen 213 comporte une mâchoire 215 mobile par rapport aux surfaces 210d et 210e d'appui du pied milieu de la carrosserie, cette mâchoire 215 étant attelée à un vérin 216 de manoeuvre de son rapprochement ou de son écartement par rapport au plan des surfaces 210d, 210e, le mouvement de la mâchoire pouvant être également assorti d'une rotation autour par exemple de l'axe du vérin 216, afin de dégager complètement le pied milieu de la cassette.

Au droit des zones 205 et 208 de la cassette, les moyens de fixation 212 et 214 sont du même type que celui 213 décrit ci-dessus à savoir comprenant une mâchoire 217 et un vérin 218, la mâchoire 217 maintenant sans serrage le bavolet contre les surfaces d'appui identiques à celles 210d, 210e au droit des zones 205 et 208.

On remarque que l'ensemble de la cassette est inscrit à l'intérieur du contour du côté de caisse auquel elle est associée de sorte qu'elle laisse des zones importantes de ce côté de caisse en porte à faux et parfaitement accessible par des moyens de mise en géométrie d'un poste soit de la ligne de fabrication soit de la ligne d'assemblage général. Dans le cas particulier illustré par les figures, les zones en porte à faux sont constituées par les brancards 220 du côté de caisse, c'est-à-dire les zones hautes à relier au pavillon et aux traverses avant et arrière. C'est en effet dans cette zone que la précision de la mise en géométrie de la carrosserie doit être la plus importante pour éviter les faux équerrages et les défauts d'aspect de la carrosserie. En partie inférieure, le côté de caisse est relié par le bas volet au soubassement ou plancher du véhicule. Cette liaison qui consiste à appliquer le bavolet contre les bords tombants 219 du soubassement n'a pas besoin d'une précision importante notamment en hauteur, c'est-à-dire perpendiculairement au plancher. En effet, entre ces éléments de carrosserie, l'accostage est réalisé avec une possibilité de glissement. A cet endroit donc, il est tout à fait possible d'agir sur la mise en géométrie de la carrosserie, dans la ligne d'assemblage générale, au travers de la cassette 201, puisque celle-ci assure une mise en référence parfaite dans une direction perpendiculaire à la figure 2, ce qui est l'exigence principale de cette liaison côté de caisse - plancher.

On indiquera enfin que la cassette 201 présente sur sa surface équipée des références en contact avec le côté de caisse et au niveau de la platine 202 de sa préhension par un robot, une autre platine qui peut être accessible au travers de l'ouverture de porte arrière que présente à cet endroit le côté de caisse. Cette platine comporte des moyens d'attelage identiques à ceux de la platine 202 pour le poignet d'un robot. Cette disposition est tout à fait avantageuse car elle permet par le simple choix du côté de préhension de la cassette, de retourner le sous-ensemble qu'elle porte afin de le placer dans un poste, soit en bosse c'est-à-dire la peau à l'extérieur du poste, soit en creux c'est-à-dire la peau contre les références du poste. Cette possibilité de retournement est avantageuse car elle permet de simplifier certaines opérations de mise en place et de soudure des accessoires devant équiper le côté de caisse.

Dans l'exemple ci-dessus décrit, les zones 205 à 211 qui forment l'interface de référence de la cassette avec certains des moyens de mise en géométrie des postes d'assemblage, sont ici constituées par de simples surfaces d'appui. Ce n'est pas sortir de l'invention que de prévoir dans ces zones comme dans la zone 220 d'autres moyens de mise en géométrie ou d'indexation qui peuvent être constitués par des pilotes, c'est-à-dire des doigts coopérant avec des alésages ou des drageoirs ou par de simples butées qui doivent être placées en appui dans des plans différents de celui de la figure 2. Par ailleurs, et notamment dans le poste d'assemblage général du côté de caisse au reste du véhicule, certains au moins des moyens 212, 213, 214 d'attelage du côté de caisse à la cassette peuvent être libérés lors de la mise en géométrie finale. En effet, les outils de mise en géométrie de la carrosserie au niveau des brancards 220 ont besoin pour ajuster la position de ces brancards à celle du pavillon des traverses ou du côté de caisse opposé, d'un certain degré de liberté du côté de caisse par rapport au plancher. Dans ce cas on ouvrira les mâchoires 217 des moyens 212 et 214 qui pincent le bas volet contre la cassette.

Ce qui a été décrit ci-dessus en regard d'un côté de caisse peut s'extrapoler sans difficulté à tous sous-ensembles de carrosserie automobile.

On mentionnera enfin un avantage important de l'invention à savoir la possibilité, à tout stade de sa construction, de sortir le sous-ensemble et la cassette de la ligne générale pour un contrôle ou l'adjonction d'une ou plusieurs opérations supplémentaires. Il existe donc, au moins pour les lignes de sous-ensembles une grande souplesse de leur adaptation à différents types de pièces à construire qui autorise donc l'introduction de nouveaux produits dans une ligne de flux existante.

## Revendications

1. Procédé d'assemblage de pièces de tôlerie par lequel au moins deux éléments séparés sont amenés dans un poste de mise en géométrie, sont immobilisés au moyen d'outils de positionnement, appartenant au poste dans une position relative déterminée et dans une position d'ensemble également déterminée dans le repère du poste et sont fixés l'un à l'autre notamment par soudure, caractérisé en ce qu'il consiste à associer à au moins l'un des éléments (200) un support (201) comportant des moyens (212, 213, 214) de préhension de l'élément, des moyens (202, 203, 204) pour son attelage à au moins un dispositif de manutention (1, 25, 31...) et des moyens pour son indexation (205, 211 et 220) dans le repère du poste de mise en géométrie, à amener l'élément (200) dans le poste de mise en géométrie par l'intermédiaire de ce support (201), à procéder à une indexation au moins partielle de l'élément dans le poste de mise en géométrie par l'intermédiaire du support , en actionnant les outils de positionnement pour qu'ils coopèrent de manière partagée avec l'élément (200) et avec le support, pour parvenir à la mise en position définitive de l'élément avec, le cas échéant, libération de certains au plus (212, 214) des moyens de préhension et à procéder à la liaison mutuelle des éléments.

2. Procédé selon la revendication 1, caractérisé en ce qu'en dehors d'une ligne d'assemblage général, il consiste à extraire du poste l'unité constituée des éléments assemblés (200) et du support (201) au moyen d'un dispositif de manutention coopérant avec le support les moyens de préhension du support ayant été, le cas échéant, remis en service.

3. Procédé selon la revendication 1 mis en oeuvre sur une ligne d'assemblage général (10), caractérisé en ce qu'il consiste à libérer tous les éléments (212, 213, 214) de préhension du support, pour séparer le support (201) de l'élément (200).

4. Procédé d'assemblage selon la revendication 1 pour réaliser consécutivement ou de manière aléatoire des pièces ou sous-ensembles différents, caractérisé en ce qu'il consiste à prévoir autant de types de support (201) qu'il y a de pièces ou sous-ensembles différents (A, B, C), à disposer le long d'une ligne de manutention générale (1) une pluralité de stations (3, 4, 6, 7) de poste (33 à 38), le nombre de postes dans chaque station étant égal au nombre de pièces ou sous-ensembles différents, le nombre de stations dépendant de la complexité du sous-ensemble à réaliser, et à desservir chaque poste de chaque station par un dispositif (31, 41) de manutention identique à celui desservant un autre poste de la même station.

5. Dispositif pour mettre en oeuvre le procédé selon l'une des revendications précédentes, caractérisé en ce que le support (201) comporte une structure mécanosoudée dont le contour extérieur est tel qu'il reste inscrit à l'intérieur de l'élément (200) auquel elle est associée lorsque l'élément constitue un sous-ensemble, cette structure étant sensiblement contenue entre deux surfaces dont l'une comporte des moyens de mise en position référencée (210c, 210d) et de maintien (215, 217) de l'élément et dont l'autre comporte certains des moyens d'indexation (205-211) de l'ensemble support-élément dans le système de référence de chaque poste qui l'accueille.

6. Dispositif selon la revendication 5, caractérisé en ce que le support (201) comporte une pluralité de zones (202, 203, 204) pourvues des moyens de son attelage à plusieurs moyens de manutention différents.

7. Dispositif selon la revendication 6, caractérisé en ce qu'au moins l'une de ces zones est située dans la surface pourvue des moyens (215, 217) de maintien de l'élément.

## Claims

1. A method of assembling sheet metal parts whereby at least two separate elements are brought to a setting-up station, are held stationary by positioning tools belonging to the station in a determined relative position and in an overall position that is likewise determined in the frame of reference of the station, and are fixed together, in particular by welding, the method being characterized in that it consists in associating at least one of the elements (200) with a support (201) including holding means (212, 213, 214) for holding the element, coupling means (202, 203, 204) for coupling the support to at least one handling device (1, 25, 31, ...), and indexing means (205, 211 and 220) for indexing the support in the frame of reference of the setting-up station, in bringing the element (200) into the setting-up station by means of the support (201), in indexing the element, at least in part, in the setting-up station by means of the support, by actuating the positioning tools so that they co-operate in shared manner both with the element (200) and with the support so as to bring the element into its final position, including, where appropriate, releasing some only of the holding means, and in proceeding to connect elements together.

2. A method according to claim 1, characterized in that, off a general assembly line, it consists in taking the unit constituted by the assembled-together elements (200) and the support (201) from the station by means of a handling device that co-operates with the support, with the holding means of the support having been put back into operation, where appropriate.

3. A method according to claim 1 and implemented on a general assembly line (10), characterized in that it consists in releasing all of the holding means (212, 213, 214) of the support to separate the support (201) from the element (200).

4. An assembly method according to claim 1, for making up different subassemblies or parts in consecutive or random manner, the method being characterized in that it consists in providing as many types of support (201) as there are different subassemblies or parts (A, B, C), in placing a plurality of stands (3, 4, 6, 7) of stations (33 to 38) along a general handling line (1), with the number of stations in each stand being equal to the number of different subassemblies or parts, the number of stands depending on the complexity of the subassembly to be built up, and in serving each station of each stand by means of a handling device (31, 41) identical to that serving another station in the same stand.

5. A device for implementing the method according to any preceding claim, characterized in that the support (201) includes an all welded structure whose outline is such that it remains inscribed within the element (200) with which it is associated when the element constitutes a subassembly, said structure being substantially contained between two surfaces, one of which includes means (210c, 210d) for referenced positioning of the element and means (215, 217) for holding the element, and the other of which includes some of the means (205-211) for indexing the support and element assembly in the reference system of each station in which it is received.

6. A device according to claim 5, characterized in that the support (201) includes a plurality of zones (202, 203, 204) provided with means for coupling it to a plurality of different handling means.

7. A device according to claim 6, characterized in that at least one of said zones is situated in the surface provided with the holding means (215, 217) for holding the element.

## Patentansprüche

1. Verfahren zum Verbinden von Blechteilen, bei dem mindestens zwei separate Elemente einem Ausrichtstand zugeführt, mittels zum Stand gehörender Positioniervorrichtungen in einer vorbestimmten relativen Position und in einer ebenfalls vorbestimmten Baugruppenposition im Bezugssystem des Standes fixiert und insbesondere durch Schweißen miteinander verbunden werden, dadurch **gekennzeichnet**, daß das Verfahren umfaßt: das Verbinden mindestens eines der Elemente (200) mit einem Träger (201), der Mittel (212, 213, 214) zum Greifen des Elementes, Mittel (202, 203, 204) zum Koppeln mit mindestens einer Fördervorrichtung (1, 25, 31...) und Mittel (205, 211 und 220) zum Indexieren im Bezugssystem des Ausrichtstandes hat, das Zuführen des Elementes (200) zum Ausrichtstand mit Hilfe des Trägers (201), das anschließende zumindest teilweise Indexieren des Elementes am Ausrichtstand mit Hilfe des Trägers unter Betätigung der Positioniervorrichtungen, damit diese teilweise mit dem Element (200) und teilweise mit dem Träger zusammenwirken und so das endgültige Positionieren des Elementes erreicht wird, wobei gegebenenfalls höchstens einige (212, 214) der Greifmittel gelöst werden, sowie das anschließende gegenseitige Verbinden der Elemente.

2. Verfahren nach Anspruch 1, dadurch **gekennzeichnet**, daß es außerhalb einer Hauptfertigungsstraße umfaßt: das Herausführen der die miteinander verbundenen Elemente (200) und den Träger (201) umfassenden Einheit aus dem Stand mittels einer Fördervorrichtung, die mit dem Träger zusammenwirkt, nachdem gegebenenfalls die Greifmittel des Trägers wieder zum Einsatz gebracht wurden.

3. Verfahren nach Anspruch 1, das in einer Hauptfertigungsstraße (10) eingesetzt wird, dadurch **gekennzeichnet**, daß es umfaßt: das Lösen aller Greifelemente (212, 213, 214) des Trägers, um den Träger (201) vom Element (200) zu lösen.

4. Verbindungsverfahren nach Anspruch 1, um nacheinander oder in beliebiger Reihenfolge verschiedenartige Teile oder Montagegruppen herzustellen, dadurch **gekennzeichnet**, daß es umfaßt: das Vorsehen ebensovieler verschiedener Arten von Trägern (201), wie es verschiedenartige Teile oder Montagegruppen (A, B, C) gibt, das Anordnen einer Vielzahl von Stationen (3, 4, 6, 7) mit Ständen (33 bis 38) entlang einer Hauptförderstraße (1), wobei die Anzahl der Stände in jeder Station gleich der Anzahl der verschiedenartigen Teile oder Montagegruppen ist, und wobei die Anzahl der Stationen von der Komplexität der zu realisierenden Montagegruppe abhängt, und das Beliefern eines jeden Standes einer jeden Station mittels einer Fördervorrichtung (31, 41), die mit der Vorrichtung zum Beliefern eines anderen Standes derselben Station identisch ausgebildet ist.

5. Vorrichtung zum Durchführen des Verfahrens nach einem der vorhergehenden Ansprüche, dadurch **gekennzeichnet**, daß der Träger (201) eine mechanisch verschweißte Struktur umfaßt, deren Außenkontur so beschaffen ist, daß sie in das Innere eines der Struktur zugeordneten Elementes (200) einbeschrieben ist, wenn das Element eine Montagegruppe bildet, wobei die Struktur im wesentlichen von zwei Flächen begrenzt ist, von denen die eine Fläche Mittel (210c, 210d) zum Positionieren in vorbestimmter Lage und Mittel (215, 217) zum Halten des Elementes und die andere Fläche einige der Mittel (205-211) zum Indexieren der den Träger und das Element umfassenden Einheit im Bezugssystem des jeweiligen diese Einheit empfangenden Standes hat.

6. Vorrichtung nach Anspruch 5, dadurch **gekennzeichnet**, daß der Träger (201) eine Vielzahl von Bereichen (202, 203, 204) hat, die Mittel zum Koppeln an eine Vielzahl verschiedenartiger Fördermittel haben.

7. Verfahren nach Anspruch 6, dadurch **gekennzeichnet**, daß mindestens einer dieser Bereiche an der Fläche liegt, an der die Mittel (215, 217) zum Halten des Elementes angeordnet sind.
